# EUROPÄISCHE PATENTSCHRIFT

(11) **EP 1 333 006 B1**
(45) Veröffentlichungstag und Bekanntmachung des Hinweises auf die Patenterteilung: **22.03.2006**
(21) Anmeldenummer: 03002072.1
(22) Anmeldetag: 29.01.2003
(51) Int. Cl.: B67D 1/00, B67D 3/00

(54) **Zapfeinrichtung**
Dispensing system
Système de soutirage

(30) Priorität: 01.02.2002 DE 10204051; 02.07.2002 DE 10229651
(43) Veröffentlichungstag der Anmeldung: 06.08.2003
(73) Patentinhaber: Aqamore GmbH, 32425 Minden (DE)
(72) Erfinder: Finke, Robert, 32312 Lübbecke (DE); Braun, Wolfgang, 21244 Buchholz i. d. Nordheide (DE)
(74) Vertreter: Grünecker, Kinkeldey, Stockmair & Schwanhäusser Anwaltssozietät

(56) Entgegenhaltungen:
- GB-A- 240 057
- US-A- 2 888 040
- US-A- 3 987 819

## Beschreibung

Die Erfindung bezieht sich auf eine Zapfeinrichtung zum Ausgeben von Getränken gemäß dem Oberbegriff des Anspruchs 1.

Der Verbrauchergeschmack tendiert zunehmend zu Mischgetränken, beispielsweise Fruchtsäfte gemischt mit karbonisiertern Wasser (Fruchtschorte). Bier gemischt mit Limonade, oder karbonisiertes Wasser gemischt mit nichtkarbonisiertem Wasser zum Einstellen des Gasgehalts (stilles oder sprudelndes Wasser), Wasser versetzt mit Kohlendioxyd und Wasser versetzt mit Sauerstoff, usw. Es ist für den Ausschank von großem Vorteil, wenn diese Mischungen direkt beim Zapfen des Getränks vorgenommen werden könnten, und nicht, wie dies bislang überwiegend geschieht, die zu mischenden Getränke nacheinander in ein und dasselbe Glas gezapft werden müssen.

Die US 3,987,819 beschreibt ein übliches Misctiventil, wie sie im Sanitärbereich zum Mischen von heißem und warmem Wasser sowie zum Ausgeben unterschiedlicher Mengen eingesetzt werden. Traditionell sind jedoch Zapfeinrichtungen, die in Restaurants oder Bars oder dergleichen zum Mischen und Ausgeben von Getränken verwendet werden, schon wegen der abweichenden Art der Betätigung in Augenhöhe der Bedienperson, anders konzipiert.

Das Mischventil ist in einem der Ausführungsbeispiele für einen Einhandbetrieb ausgelegt und enthält einen Mischhebel. Der Mischhebel ist um eine im Wesentlichen horizontale Achse in einer Gehäusekappe des Mischventils nach oben und unten verschwenkbar gelagert. Die horizontale Achse in der Gehäusekappe teilt den Schwenkhebel in einen ersten Hebelarm, der den Handgriff enthält, und einen zweiten Hebelarm, der (über einen in einem Langloch laufenden Stift) direkt mit einem Betätigungsstößel verbunden ist, der zum Mischen um seine (vertikal angeordnete) Längsachse verdreht und zum Absperren und Öffnen entlang seiner vertikalen Längsachse verschoben werden muss. Demgemäß wird der Handhebel beim Mischen um die vertikale Längsachse des Stößels verdreht, wobei er die Gehäusekappe, an der er mit seiner horizontalen Schwenkachse befestigt ist, mitnimmt. Zum Einstellen des Volumen bzw. Öffnen und Schließens des Ventils muss jedoch der Handhebel um seine horizontale Achse in der Gehäusekappe verschwenkt werden.

Die GB-240 057 beschreibt eine Zapfvorrichtung zum Ausgeben und Mischen von Getränken. Die Zapfvorrichtung enthält einen Zapfhebel, der um eine horizontale Achse schwenkbar in einem Lagerblock gelagert ist, der verdrehbar auf einem Bolzen sitzt. Auf dem Bolzen sitzt weiterhin verdrehbar und axial verschiebbar eine Betätigungsplatte mit einem umfangsseitig vorstehenden Finger. Im Bereich der Platte ist eine Absperrarmatur in Form eines mechanisch betätigbaren Ventils für Sodawasser angeordnet. Im Verschwenkbereich des umfangsseitig vorstehenden Fingers sind eine Vielzahl weiterer Absperrarmaturen rund um den Bolzen angeordnet, die ebenfalls mechanisch betätigbar sind und jeweils für eine bestimmte Durchlassmenge für einen Sirup ausgelegt sind. Wird der Handhebel um seine horizontale Achse im Block verschwenkt, so wird die Betätigungsplatte axial zum Bolzen in eine Position verschoben, in der die Platte direkt auf das Sodaventil und der Umfangsfinger direkt auf eines der Sirupventile einwirkt. Soll ein anderes Sirupventil ausgewählt werden, so wird der Handgriff mit dem Block und der Betätigungsplatte um die im Abstand zur ersten Schwenkachse liegende Längsachse des Bolzens in die neue Stellung des Fingers verdreht.

Die US 2,888,040 beschreibt eine Zapfeinrichtung zum Ausgeben von Sodawasser. Die Zapfeinrichtung enthält einen Handhebel, der mit seinem freien Ende direkt in einem Schlitz in einem Ventilstößel einer mechanischen Absperrarmatur so gelagert ist, dass er den Ventilstößel entlang seiner Längsachse verschieben kann. Der Handgriff ist weiterhin mit Hilfe einer Lagerkugel in einer Hülse schwenkbar gelagert, die auf dem Ventilstößel sitzt, wobei die Lagerkugel einen radialen Abstand zum Ventilstößel aufweist. Der Ventilstößel ist weiterhin mit einer Betätigungseinrichtung zum Betätigen einer Vielzahl von Sirupventilen für fest eingestellte Mischverhältnisse verbunden. Soll gezapft werden, so wird der Handgriff um eine sich durch die Lagerkugel erstreckende Achse verschwenkt, wodurch der Ventilstößel axial bewegt wird. Soll das Mischungsverhältnis und/oder die Zumischungsflüssigkeit verändert werden, so wird der Handgriff um die Längsachse des Ventilstößels verschwenkt.

In der WO90/15275 ist eine Mischvorrichtung beschrieben, die speziell an das Mischen zweier Wasser mit unterschiedlichem Kohlendioxydgehalt angepasst ist. Die bekannten Mischvorrichtung enthält zwei Einlassleitungen, die in eine gemeinsame Mischkammer münden. In jeder der Einlassleitungen ist jeweils ein Rückschlagventil und ein Nadelventil, beaufschlagt durch Fedem, angeordnet. Das Nadelventil in jeder Einlaufleitung ist zum Einstellen des Mischverhältnisses verstellbar. Die Verstellung muss jedoch mit Hilfe eines Schraubenziehers geschehen, so dass ein einmal eingestelltes Mischungsverhältnis nicht leicht geändert werden kann. Alle mit Getränken und Lebensmitteln insgesamt in Berührung kommenden Bauteile müssen jedoch in regelmäßigen Abständen gereinigt werden. Ob die bekannte Mischvorrichtung zum Reinigen demontierbar ist, ist nicht beschrieben. Aber selbst wenn sie demontierbar wäre, wäre sie durch ihre Vielzahl von Bauteilen durch einen ungeübten Benutzer nicht mehr zusammenzusetzen.

Der Erfindung liegt somit die Aufgabe zugrunde, eine konstruktiv einfache Zapfeinrichtung zu schaffen, die einfach zu bedienen ist und auf einfache Weise eine Veränderung des Mischungsverhältnisses gestattet.

Die Aufgabe wird durch die im Anspruch 1 angegebenen Merkmale gelöst.

Durch die erfindungsgemäße Ausgestaltung ist sowohl das Betätigen der electronisch befätigbaren Absperrarmatur zum Zapfen eines Getränks als auch das Einstellen eines vorbestimmten Mischungsverhältnisses zwischen einem ersten und einem zweiten Getränk durch den Benutzer und bei Betätigung eines einzigen Handgriffes möglich. Diese Einhandbetätigung ist für die Bedienperson äußerst zweckmäßig, da sie ohne weiteres in die bestehenden Zapfsäulen integriert werden kann, bei denen der Auslass in einer bedienungsfreundlichen Höhe angeordnet ist, wodurch jedoch die Bedienperson das Glas, in das gezapft werden soll, mit einer Hand halten muss. Durch die erfindungsgemäße Einhandbedienung kann weiterhin das Mischungsverhältnis noch während des Zapfens verändert werden.

Vorteilhafte Weiterbildungen der Erfindung sind den Unteransprüchen zu entnehmen.

Ausführungsbeispiele der Erfindung werden nachfolgend anhand der Zeichnungen näher erläutert. Es zeigen:
- Fig. 1: eine schematische Darstellung eines ersten Ausführungsbeispiels einer erfindungsgemäßen Zapfvorrichtung in teilweise geschnittener Seitenansicht,
- Fig. 2: eine auseinandergezogene, perspektivische Darstellung einer Zapfvorrichtung ähnlich Fig. 1,
- Fig. 3: eine auseinandergezogene, perspektivische Darstellung eines weiteren Ausführungsbeispiels einer erfindungsgemäßen Zapfvorrichtung, und
- Fig. 4: eine schematische Teildarstellung eines weiteren Ausführungsbeispiels einer erfindungsgemäßen Zapfvorrichtung in Vorderansicht.

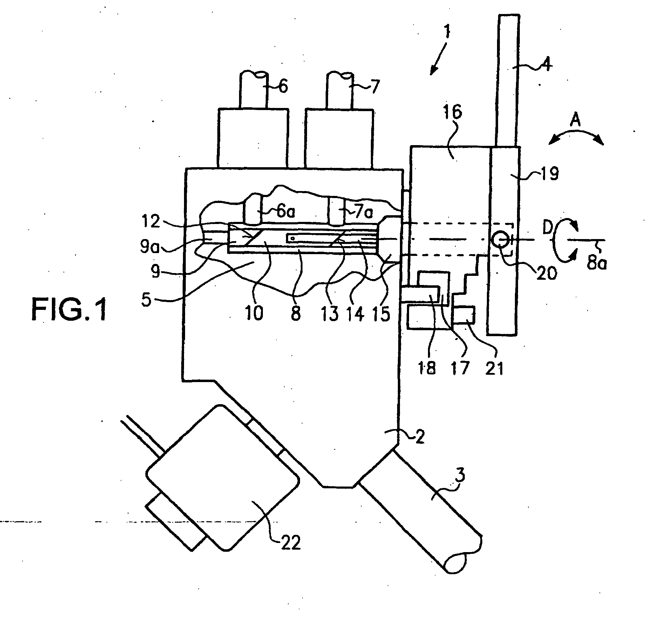

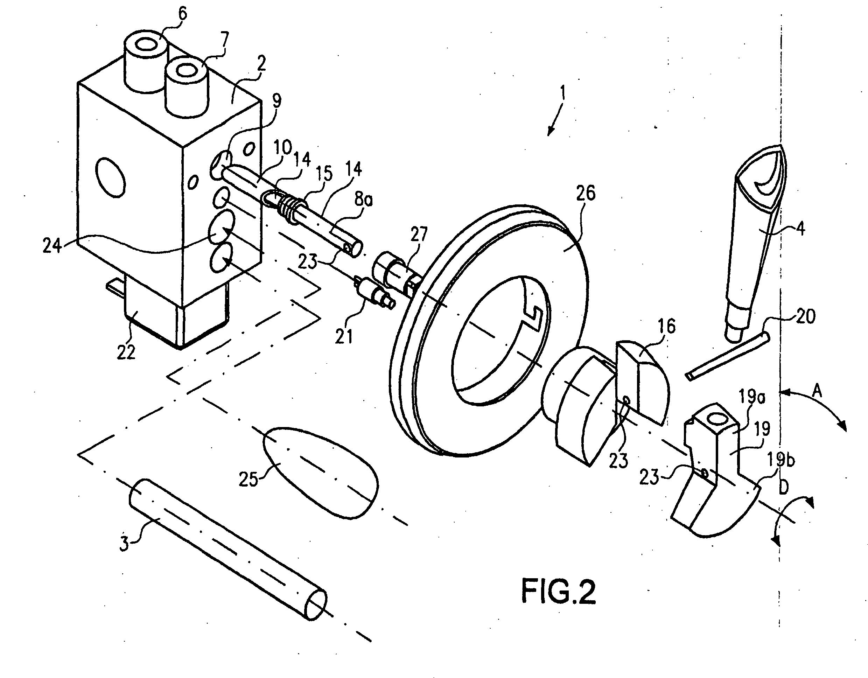

Die Fig. 1 und 2 zeigen in schematischer Darstellung eine insgesamt mit 1 bezeichnete Zapfvorrichtung, wie sie zum Zapfen von Getränken in Gaststätten und Restaurants üblich ist. Die Zapfvorrichtung 1 enthält ein Gehäuse 2 mit einem Getränkeauslauf 3 und einem Handgriff 4, mit dem eine herktimmliche, nicht gezeigte Absperrarmatur im Inneren des Gehäuses 2 zum Öffnen und Schließen des Getränkeauslaufs 3 und ggfs. zum Verändern des Volumens des ausgegebenen Getränks auch zwischen den Extremstellungen "O-Volumen" und "Maximalvolumen", betätigt werden kann.

Im Gehäuse 2 ist eine Mischarmatur oder Mischvorrichtung 5 untergebracht, die über zwei Zufuhrleitungen 6 und 7 mit zwei unterschiedlichen Ftuiden, im vorliegenden Fall Getränke oder Getränkerohstoffe in Flüssigkeitsform, versorgt wird.

Die Mischvorrichtung 5 enthält eine durch eine Umfangswandung 8 begrenzte Fluidkammer 9, in die mit einer ersten Einlassöffnung 6a die erste Leitung 6 und mit einer zweiten Einlassöffnung 7a die zweite Leitung 7 einmündet.

Die Wandung 8 ist zylindrisch ausgebildet, mit waagerechter Achse 8a im Gehäuse angeordnet und enthält sowohl die Fluidkammer 9 als auch einen Auslass 9a. Dabei münden die Einlassöffnungen 6a, 7a in einem axialen Abstand zueinander bezüglich der Mittelachse 8a und der Auslass 9a erstreckt sich durch eine Stimseite der Fluidkammer 9. Der Auslass 9a ist mit der nicht gezeigten Absperrarmatur im Inneren des Gehäuses 2 verbunden.

Von der dem Auslass 9a entgegengesetzten Stimseite her ist in die Fluidkammer 9 ein Mischkörper 10 lösbar eingesetzt. Der Mischkörper 10 ist von außerhalb des Gehäuses 2 durch den Handgriff 4 in der Fluidkammer 9 um die Achse 8a zum Verändern des Mischungsverhältnisses der durch die entsprechenden Einlassöffnungen 6a und 7a strömenden Fluide verdrehbar.

Der Mischkörper 10 ist als zylindrisches Rohrstück mit schräg zur Mittellinie 8a verlaufenden, ebenen Stirnflächen 12 bzw. 13 ausgebildet. Der Handgriff 4 ist bevorzugt lösbar über einen Befestigungsstift 14, dessen Außendurchmesser kleiner ist als der Innendurchmesser des rohrförmigen Mischkörpers 10, im Inneren des Mischkörpers 10 befestigt. Der Hefestigungsstift 14 erstreckt sich bevorzugt durch eine als Anschlag dienende Abdichtmanschette 15 für die untere, offene Stirnfläche der Fluidkammer 9. Der Mischkörper 10 mit dem Befestigungsstift 14 und der Abdichtmanschette 15 bildet somit eine Einheit, die einfach von einer Stirnseite her in die zylindrische Wandung 8 eingesetzt werden kann.

Der Befestigungsstift 14 und die Dichtmanschette 15 sind so angeordnet, dass der Mischkörper 10 im Abstand mittig zu den Einlassöffnungen 6a, 7a ausgerichtet ist. Wird nun der Mischkörper 10 entlang des Doppelpfeiles D um die Achse 8a verdreht, so überdecken die Begrenzungskanten der schrägen Stirnflächen 12 bzw. 13 graduell zunehmend bzw. graduell abnehmend die jeweils anliegende Einlassöffnung 6a bzw. 7a, wobei der Umfangsbereich des Mischkörpers 10, der sich jeweils an den Stirnflächen 12, 13 anschließt als Abdeckbereich B zum vollständigen oder teilweisen Abdecken der jeweils anliegenden Einlassöffnung 6a und 7a dient.

Mit dem durch den Abdichtstopfen 15 verlängerten Betätigungsstift 14 ist ein Zapfsokkel 16, der mit dem Handgriff 4 verbunden ist, derart gekoppelt, dass der Betätigungsstift 14 mit dem Mischkörper 10 um die Achse 8a verdreht wird, wenn der Handgriff 4 entlang des Doppelpfeils D in einer sich senkrecht zur Zeichnungsebene der Fig. 1 erstreckenden Ebene verdreht wird. Im Zapfsockel 16 ist eine sich über einen vorbestimmten Winkelbereich um die Achse 8a erstreckende Führung 17 ausgearbeitet, in der ein fest mit dem Gehäuse 2 verbundener Anschlagstift 18 läuft, wobei die Winkelerstreckung der Führung 17 um die Achse 8a den Verschwenkbereich des Mischkörpers 10 begrenzt.

Der Handgriff 4 enthält einen Betätigungshebel 19, der im dargestellten Ausführungsbeispiel als gesondertes Bauteil ausgebildet und mit dem eigentlichen Griff 4 verbunden. Griff und Betätigungshebel können jedoch auch als einstückiges Element ausgebildet sein. Der Betätigungshebel ist um eine sich durch den Zapfsockei 16 und den Betätigungsstift 14. erstreckende Achse 20 in Richtung, des Doppelpfeiles A verschwenkbar. Die Schwenkachse 20 verläuft senkrecht zur Zeichnungsebene der Fig. 1 und schneidet die Drehachse 8a. Beim Verschwenken des Betätigungshebels 19 in Fig. 1 nach rechts wird ein Kontaktstift 21 zunächst berührt und zunehmend weiter nach innen gepresst, wobei die Bewegung des Kontaktstiftes 21 auf üblichem, elektronischem Wege, beispielsweise über ein Solennoid 22, zum Steuern eines im Inneren des Gehäuses 2 untergebrachten, nicht gezeichneten, üblichen Absperrventils verwendet wird, das zwischen dem Auslass 9a und dem Getränkeauslauf 3 zwischengeschaltet wird. Die Steuerung erfolgt derart, dass das Ventil desto stärker geöffnet wird, je weiter der Handgriff 4 ausgeschwenkt, d.h. in Fig. 1 nach rechts bewegt wird. Wird der Handgriff 4 in die Ausgangslage zurück verschwenkt, so folgt der Kontaktstift 21, z.B. unter Wirkung einer Feder. Der Kontaktstift kann jedoch auch in der Art eines Schalters zum einfachen Öffnen und Schließen des Absperrventils ausgebildet sein.

Die Zapfvorrichtung 1 in Fig. 1 kann somit einerseits, durch Drehen des Handgriffs 4 in einer Ebene senkrecht zur Zeichnungsebene, das Mischungsverhältnis der aus den Leitungen 6 und 7 zulaufenden Getränke bestimmen und darüber hinaus durch Verschwenken des Handgriffs 4 in Richtung des Pfeiles A gleichzeitig zapfen.

Wie Fig. 2 zeigt, wird der Betätigungshebel 19 durch die als Stift ausgebildete Schwenkachse 20, die sich durch eine Öffnung 23 im Betätigungsstift 14, im Zapfsokkel 16 und im Betätigungshebel 19 erstreckt in einen ersten Hebelarm 19a und einen zweiten Hebelarm 19b geteilt. Der erste Hebelarm 19a ist mit dem Handgriff 4 in Form eines der üblichen Handhebel verbunden. Der zweite Hebelarm 19b ist zu einem Übertragungselement verbreitert, das eine im Wesentlichen kreissektorförmige Gestalt aufweist, dessen Winkelbereich sich über den gesamten Verschwenkbereich in Richtung des Doppelpfeiles D zum Verdrehen des Mischkörpers 10 erstreckt. Dieser Verschwenkwinkelbereich wird, wie bereits anhand Fig. 1 erläutert, beispielsweise durch die in Fig. 2 nicht dargestellte Führung 17 festgelegt. Das Betätigungsteil 19 kann somit über den gesamten Verschwenkwinkel um die Achse 8a mit dem Kontaktstift 21 in Kontakt gebracht werden und diesen zum Betätigen der Absperrarmatur linear bewegen, sobald der Benutzer den Handgriff 4 in Richtung des Doppelpfeiles A um die Schwenkachse 20 verschwenkt. Das Übertragungselement ist in einer angepassten Ausnehmung 25 des Zapfsockels 16 aufgenommen und mit diesem sowie dem Stift der Schwenkachse 20 verdrehbar.

In Fig. 2 enthält das Gehäuse 2 eine weitere Aufnahmeöffnung 24 durch die ein nicht gezeigter Kompensationskörper in den Strömungsweg des Getränks geschoben wer den kann und bei gashaltigen Getränken, beispielsweise Getränken, denen Kohlendioxyd oder Sauerstoff zugesetzt wurde, für einen gleichmäßigen, spritzerfreien Auslauf auch bei hohem Gasgehalt sorgt.

Die Zapfvorrichtung enthält weiterhin eine der üblichen Abdeckrosetten 26 und eine Sicherungsmutter 27.

Wie Fig. 2 zeigt, sind die einzelnen Bestandteile der Zapfvorrichtung, insbesondere der Mischkörper 10 mit seinem Betätigungsstift 14 und der Abdichtmanschette 15, der Zapfsockel 16, der Stift der Schwenkachse 20 und der Betätigungshebel 19 voneinander lösbar ausgebildet, so dass eine einfache und hygienisch einwandfreie Reinigung der Zapfvorrichtung möglich ist. Zur Demontage wird zunächst die Abdeckrosette 26 entfernt und der die Schwenkachse 20 bildende Stift aus seiner Öffnung 23 im Zapfsockel 16, dem Betätigungshebel 19 und dem Betätigungsstift 14 herausgezogen. Dann wird die Sicherungsmutter 27 gelöst und der Mischkörper 10 an seinem Befestigungsstift 14 aus der Fluidkammer 9 entnommen. Der Kontaktstift 21, gegebenenfalls der Kompensationskörper und der Getränkeauslauf 3 werden ebenfalls aus ihren zugeordneten Befestigungsöffnungen im Gehäuse 2 herausgenommen. Dann kann sowohl das Gehäuse 2 als auch die übrigen Bauteile der Zapfvorrichtung gereinigt werden.

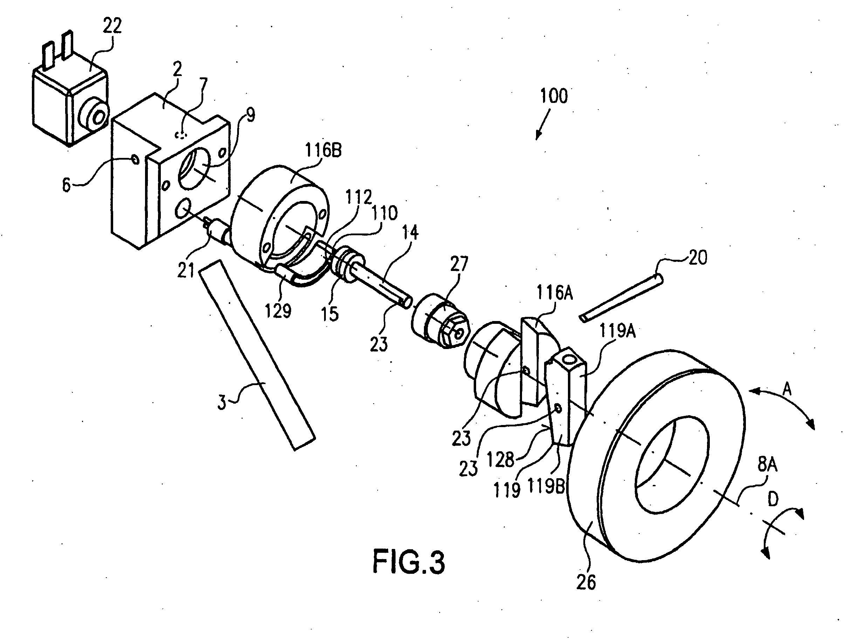

Fig. 3 zeigt ein weiteres Ausführungsbeispiel einer erfindungsgemäßen Zapfvorrichtung 100, wobei mit den vorangegangenen Ausführungsbeispielen vergleichbare Bauteile mit den gleichen Bezugszeichen gekennzeichnet und nicht nochmals erläutert werden.

Die Zapfvorrichtung 100 unterscheidet sich von der Zapfvorrichtung 1 zum einen durch einen Mischkörper 110, der nur eine einzige, schräg zur Drehachse 8a verlaufende Stimfläche 112 aufweist, der in Verbindung mit an einander entgegengesetzten Seiten in die Fluidkammer 9 einmündenden Getränkeleitungen 6, 7 verwendet wird. Dabei bildet die Stimfläche 112 eine geschlossene Fläche, d.h. der Auslass aus der Fluidkammer 9 verläuft nicht durch den Mischkörper 110 und der Mischkörper 110 ist bevorzugt massiv. Die Funktion und die Betätigung des Mischkörpers 110 entspricht darüber hinaus der Funktion und Betätigung des Mischkörpers 10. Zweckmäßigerweise sind jedoch in den Getränkeleitungen 6 und 7 jeweils nicht gezeichnete Rückschlagventile angeordnet.

Die Zapfvorrichtung 100 unterscheidet sich ferner von der Zapfvorrichtung 1 durch einen zweiteiligen Zapfsockel 116a, 116b. Das Zapfsockelteil 116a nimmt, wie auch der Zapfsockel 16, einen Betätigungshebel 119 auf, den wiederum die Lageröffnung 23 für die Schwenkachse 20 in einen ersten Hebelarm 119a und einen zweiten Hebelarm 119b trennt. Der zweite Hebelarm 119b, der dem nicht gezeichneten Handgriff gegenüberliegt, weist an seiner in Richtung auf das zweite Zapfsockelteil 116b weisende Oberfläche eine Anschlagfläche 128 auf.

Das zweite Zapfsockelteil 116b ist fest mit dem Gehäuse 2 verbunden und lagert ein Übertragungsteil 129, das sich über den gesamten Verschwenkbereich D um die Achse 8a zum Drehen des Mischkörpers 110 erstreckt sowie mit dem Kontaktstift 21 in Wirkungsverbindung steht und axial bezüglich der Drehachse 8a verschiebbar ist. Das Übertragungsteil 129 hat die Form einer koaxial zur Drehachse 8a gebogenen Platte und ist im zweiten Zapfsockelteil 116b so gelagert, dass es die Verdrehung des ersten Zapfsockelteils 116a nicht behindert.

Auch die Zapfvorrichtung 100 ist zum Reinigen auf einfache Weise auseinander zu nehmen, wie dies bereits anhand des vorangegangenen Ausführungsbeispiels beschrieben wurde. Auch die Funktion und Wirkungsweise entspricht denen der vorangegangenen Ausführungsbeispiele, so dass sich eine eingehende Beschreibung erübrigt.

Anstelle der in Fig. 3 gezeigten, ebenen Anschlagfläche 128 kann im zweiten Hebelarm 119b eine nutartige, mit gleichem Krümmungsradius um die Drehachse 8a verlaufende Vertiefung ausgebildet sein, die das Übertragungsteil 129 aufnimmt, wobei die Betätigungsfläche 128 am Grund dieser Vertiefung ausgebildet ist.

Die Zapfvorrichtung 100 ist in gleicher Weise wie die Zapfvorrichtung 1 zum gründlichen Reinigen demontierbar. Auch die Funktion und Handhabung entspricht der Zapfvorrichtung 1, so dass auf eine eingehendere Erläuterung verzichtet werden kann.

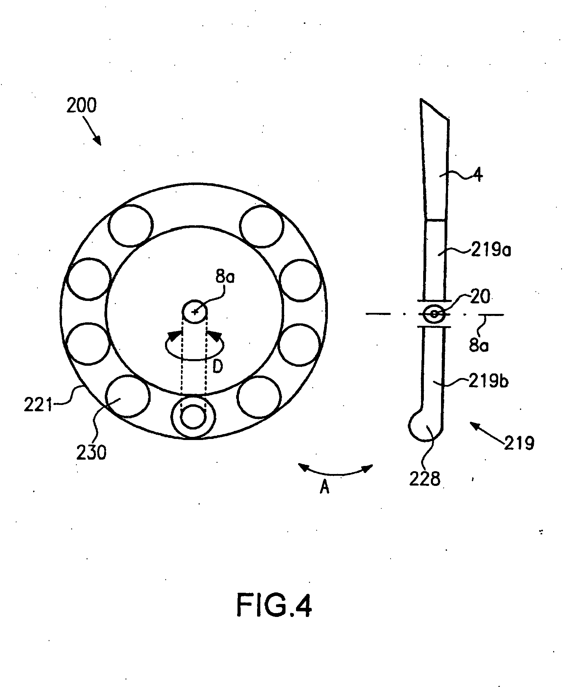

Fig. 4 zeigt einen abgewandelten Teil eine weiteren Zapfvorrichtung 200, bei der der Handgriff 4 einen Betätigungshebel 219 enthält, der wiederum durch die Schwenkachse 20 in einen ersten Hebelarm 219a und einen zweiten Hebelarm 219b geteilt ist. Das freie Ende des zweiten Hebelarms 219b ist mit einer Betätigungsfläche 228 in Form eines parallel zur Drehachse 8a vorstehenden Betätigungsvorsprungs 228 versehen.

Statt des linearen Kontaktschalters ist eine Kontaktscheibe 221 vorgesehen, die koaxial zur Drehachse 8a mit einer Vielzahl von Berührungsfeldern 230 oder einem ringförmigen Berührungsfeld versehen ist. Die Berührungsfelder 230 sind mit einer elektronischen Steuerung verbunden, die entweder allein die Absperrarmatur oder die Absperrarmatur und den Mischkörper steuert. Im ersteren Fall wird der Mischkörper wie bereits beschrieben durch Verdrehen des Handgriffes 4 um die Achse 8a verdreht, und stellt dadurch das Mischungsverhältnis zwischen den beiden Getränken ein. Wird dann der Handgriff 4 in Richtung des Doppelpfeiles A verschwenkt, so wird die Absperrarmatur geöffnet. Im zweiten Fall ist die Drehachse 8a, um die der Handgriff 4 verdreht wird, nicht mehr mit dem Mischkörper verbunden, und jedes Berührungsfeld 230 ist mit einem bestimmten Mischungsverhältnis programmiert, wobei beim Drücken dieses Betätigungsfeldes 230 sowohl die Mischvorrichtung als auch die Absperrarmatur bewegt werden.

In Abwandlung der beschriebenen und gezeichneten Ausführungsbeispiele können die anhand der einzelnen Fig. gezeichneten Einzelheiten untereinander ausgetauscht werden, wobei beispielsweise die Mischvorrichtung nach Fig. 2 mit dem Betätigungshebel nach Fig. 3 und umgekehrt kombiniert werden kann. Die erfindungsgemäße Zapfvorrichtung kann auch mit anderen Mischvorrichtungen verwirklicht werden. So können abgewandelte Mischkörper verwendet werden, die gewellte Stimseiten aufweisen oder eine Umfangsnut oder zwei in Umfangsrichtung beabstaridete Öffnungen aufweisen, die in einen an ihrer Stimseite ausmündenden Auslass führen, wie in der DE 102 29 654 mit gleichem Zeitrang beschrieben, auf die hiermit Bezug genommen wird. Zum Übertragen der Bewegung des Handgriffes auf die Absperrarmatur können andere Maßnahmen und anders geformte Übertragungsstücke vorgesehen werden.

So ist es beispielsweise möglich, den Kontaktstift zum Schalter mit einer verbreiterten Auflagefläche zu versehen, um sicherzustellen, dass bei jeder Drehstellung des Handgriffes die Absperrarmatur betätigt werden kann. Weiterhin ist es möglich, als Mischvorrichtung eine linear zu betätigende Vorrichtung einzusetzen, und die Absperrarmatur durch Verdrehen des Hebels zu betätigen. Auch können in das Gehäuse weitere Zufuhrleitungen zum Einleiten weiterer Getränke oder -rohstoffe integriert werden.

## Patentansprüche

1. Zapfeinrichtung (1, 100, 200) zum Ausgeben von Getränken, mit einem Gehäuse (2), einem mit einer Absperrarmatur versehenen Auslauf (3), einer Mischvorrichtung (5, 105) zum Mischen eines ersten und eines zweiten Getränks, und einem außerhalb des Gehäuses (2) zugänglichen Handgriff (4), mit dem sowohl die Mischvorrichtung (10) als auch die Absperrarmatur betätigbar sind, wobei der Handgriff (4) um eine erste Achse (8a) zum Betätigen der Mischvorrichtung (5, 105) und um eine zweite Achse (20) zum Betätigen der Absperrarmatur verschwenkbar ist, und **dadurch gekennzeichnet, dass** die Absperrarmatur elektronisch betätigbar ist und mit dem Handgriff (4) über ein Kontaktteil (21, 221) in betätigender Verbindung steht.

2. Zapfeinrichtung nach Anspruch 1, **dadurch gekennzeichnet, dass** sich die erste und die zweite Achse (8a. 20) in einer Lagerstelle (20, 23) des Handgriffs (4) kreuzen.

3. Zapfeinrichtung nach Anspruch 2, **dadurch gekennzeichnet, dass** die Lagerstelle (20, 23) einen Betätigungshebel (19, 119, 219) in einen ersten Hebelarm (19a, 119a, 219a) und einen zweiten Hebelarm (19b, 119b, 219b) teilt, wobei der erste Hebelarm (19a, 119a, 219a) den Handgriff (4) enthält, und wobei der zweite Hebelarm (19b, 119b, 219b) über ein Übertragungsteil (19b, 128, 129, 228, 230) mit dem Kontaktteil (21, 221) der Absperrarmatur so gekoppelt ist, dass der zweite Hebelarm (19b, 119b, 219b) über einen Verschwenkbereich des Handgriffes (4) auf das Kontaktteil (21, 221) einwirkt.

4. Zapfeinrichtung nach Anspruch 3, **dadurch gekennzeichnet, dass** das freie Ende des zweiten Hebelarms (19b) zum Ausbilden des Übertragungsteils (19b) verbreitert ist.

5. Zapfeinrichtung nach Anspruch 4, **dadurch gekennzeichnet, dass** das Übertragungsteil (19b) kreissektorförmig ausgebildet ist.

6. Zapfeinrichtung nach einem der Ansprüche 1 bis 3, **dadurch gekennzeichnet, dass** das Übertragungsteil (129) zwischen einer Anschlagfläche (128) am zweiten Hebelarm (119) und dem Kontaktteil (21) angeordnet ist.

7. Zapfeinrichtung nach einem der Ansprüche 1 bis 6, **dadurch gekennzeichnet, dass** die zweite Achse (20) einen Stift enthält, der lösbar in einer Öffnung (23) aufgenommen ist, die sich durch den Betätigungshebel (19, 119), und einen Zapfsockel (16, 116) erstreckt, und der den Betätigungshebel (19, 119) lösbar mit dem Zapfsockel (16, 116) verbindet.

8. Zapfeinrichtung nach einem der Ansprüche 2 bis 7, **dadurch gekennzeichnet, dass** die Lagerstelle (20, 23) in einem Zapfsockel (16, 116) vorgesehen ist, wobei der Zapfsockel (16, 116) einen Anschlag (17, 18) zum Begrenzen der Verschwenkbewegung des Handgriffs (4) enthält.

9. Zapfeinrichtung nach Anspruch 2 oder 3, **dadurch gekennzeichnet, dass** das Kontaktteil (221) wenigstens eine sich um den Verschwenkbereich des Handgriffes (4) erstreckende Betätigungsfläche (230) aufweist, die vom zweiten Hebelarm (219b) zu betätigen ist.

## Claims

1. Tap device (1, 100, 200) for dispensing beverages, with a housing (2), an outlet (3) provided with a shut-off valve, a mixing device (5, 105) for mixing a first and a second beverage, and a handle (4) which is accessible outside the housing (2) and with which both the mixing device (10) and the shut-off valve can be actuated, the handle (4) being pivotable about a first shaft (8a) for actuating the mixing device (5, 105) and about a second shaft (20) for actuating the shut-off valve, and **characterised in that** the shut-off valve can be actuated electronically and is connected in actuating relationship to the handle (4) via a contact portion (21, 221).

2. Tap device according to claim 1, **characterised in that** the first and the second shaft (8a, 20) intersect at a bearing point (20, 23) of the handle (4).

3. Tap device according to claim 2, **characterised in that** the bearing point (20, 23) divides an actuating lever (19, 119, 219) into a first lever arm (19a, 119a, 219a) and a second lever arm (19b, 119b, 219b), the first lever arm (19a, 119a, 219a) containing the handle (4), and the second lever arm (19b, 119b, 219b) being coupled via a transmitting portion (19b, 128, 129, 228, 230) to the contact portion (21, 221) of the shut-off valve in such a way that the second lever arm (19b, 119b, 219b) acts via a pivot region of the handle (4) on the contact portion (21, 221).

4. Tap device according to claim 3, **characterised in that** the free end of the second lever arm (19b) is widened to form the transmitting portion (19b).

5. Tap device according to claim 4, **characterised in that** the transmitting portion (19b) is circle sector-shaped.

6. Tap device according to any of claims 1 to 3, **characterised in that** the transmitting portion (129) is arranged between a stop face (128) on the second lever arm (119) and the contact portion (21).

7. Tap device according to any of claims 1 to 6, **characterised in that** the second shaft (20) contains a pin which is releasably held in an opening (23) extending through the actuating lever (19, 119) and a tap fitting (16, 116), and which connects the actuating lever (19, 119) releasably to the tap fitting (16, 116).

8. Tap device according to any of claims 2 to 7, **characterised in that** the bearing point (20, 23) is provided in a tap fitting (16, 116), the tap fitting (16, 116) containing a stop (17, 18) for limiting the pivot movement of the handle (4).

9. Tap device according to claim 2 or 3, **characterised in that** the contact portion (221) has at least one actuating surface (230) which extends about the pivot region of the handle (4) and which can be actuated by the second lever arm (219b).

## Revendications

1. Dispositif de soutirage (1, 100, 200) pour distribuer des boissons, comportant un boîtier (2), une sortie (3) pourvue d'une robinetterie d'arrêt, un dispositif de mélange (5, 105) pour mélanger une première boisson et une deuxième boisson, et une poignée (4) accessible depuis l'extérieur du boîtier (2), avec laquelle on peut actionner tant le dispositif de mélange (10) que la robinetterie d'arrêt, la poignée (4) pouvant pivoter autour d'un premier axe (8a) pour actionner le dispositif de mélange (5, 105) et autour d'un deuxième axe (20) pour actionner la robinetterie d'arrêt, **caractérisé en ce que** la robinetterie d'arrêt peut être actionnée électroniquement et est en liaison d'actionnement avec la poignée (4) via une partie de contact (21, 221).

2. Dispositif de soutirage selon la revendication 1, **caractérisé en ce que** le premier axe (8a) et le deuxième axe (20) se croisent en un point de montage (20, 23) de la poignée (4).

3. Dispositif de soutirage selon la revendication 2, **caractérisé en ce que** le point de montage (20, 23) divise un levier d'actionnement (19, 119, 219) en un premier bras de levier (19a, 119a, 219a) et un deuxième bras de levier (19b, 119b, 219b), le premier bras de levier (19a, 119a, 219a) contenant la poignée (4), et le deuxième bras de levier (19b, 119b, 219b) étant accouplé via une pièce de transmission (19b, 128, 129, 228, 230) avec la partie de contact (21, 221) de la robinetterie d'arrêt, de telle sorte que le deuxième bras de levier (19b, 119b, 219b) agit sur la partie de contact via une zone de pivotement de la poignée (4).

4. Dispositif de soutirage selon la revendication 3, **caractérisé en ce que** l'extrémité libre du deuxième bras de levier (19b) est élargie pour réaliser la pièce de transmission (19b).

5. Dispositif de soutirage selon la revendication 4, **caractérisé en ce que** la pièce de transmission (19b) est réalisée en forme de secteur circulaire.

6. Dispositif de soutirage selon l'une des revendications 1 à 3, **caractérisé en ce que** la pièce de transmission (129) est agencée entre une surface de butée (128) sur le deuxième bras de levier (119) et la partie de contact (21).

7. Dispositif de soutirage selon l'une des revendications 1 à 6, **caractérisé en ce que** le deuxième axe (20) contient une goupille qui est reçue de manière détachable dans une ouverture (23) qui s'étend à travers le levier d'actionnement (19, 119) et un socle de soutirage (16, 116) et qui relie le levier d'actionnement (19, 119) de manière détachable avec le socle de soutirage (16, 116).

8. Dispositif de soutirage selon l'une des revendications 2 à 7, **caractérisé en ce que** le point de montage (20, 23) est prévu dans un socle de soutirage (16, 116), le socle de soutirage (16, 116) contenant une butée (17, 18) pour limiter le mouvement de pivotement de la poignée (4).

9. Dispositif de soutirage selon l'une ou l'autre des revendications 2 et 3, **caractérisé en ce que** la partie de contact (221) présente au moins une surface d'actionnement (230) s'étendant autour de la zone de pivotement de la poignée (4), laquelle doit être actionnée par le deuxième bras de levier (219b).
